# EUROPÄISCHE PATENTANMELDUNG

(11) **EP 1 528 042 A1**
(43) Veröffentlichungstag der Anmeldung: **04.05.2005**
(21) Anmeldenummer: 04104377.9
(22) Anmeldetag: 10.09.2004
(51) Int. Cl.: C01B 31/02, H01F 41/30, H01F 1/00

(54) **Verfahren zur Herstellung von nanostrukturierten magnetischen Funktionselementen**

(30) Priorität: 25.09.2003 DE 10345755
(71) Anmelder: Leibniz-Institut für Festkörper- und Werkstoffforschung Dresden e.V., 01069 Dresden (DE)
(72) Erfinder: Kozhuharova, Radinka, 01069, Dresden (DE); Ritschel, Manfred, 01099 Dresden (DE); Mönch, Jens Ingolf, 01705, Freital (DE); Leonhardt, Albrecht, 01326, Dresden (DE); Elefant, Dieter, 01445, Radebeul (DE); Graf, Andreas, 06110, Halle (DE); Groudeva-Zotova, Stefka, 01309, Dresden (DE); Schneider, Claus M., 01309, Dresden (DE)
(74) Vertreter: Rauschenbach, Marion

(57) **Zusammenfassung**

Die Erfindung bezieht sich auf die Gebiete der Magnetwerkstoffe und der Nanotechnik und betrifft ein Verfahren zur Herstellung von nanostrukturierten magnetischen Funktionselementen, die beispielsweise zur Datenspeicherung angewandt werden können.

Aufgabe der Erfindung ist es, ein Verfahren anzugeben, mit dessen Hilfe gefüllte Kohlenstoff-Nanoröhren mit ferromagnetischen Eigenschaften hergestellt werden können.

Die Aufgabe wird gelöst durch ein Verfahren, bei dem in oder auf ein Substrat Strukturierungen realisiert werden, mindestens diese Strukturierungen teilweise mit einer katalytisch wirkenden Metallschicht gefüllt und/oder beschichtet werden, anschließend mittels der chemischen Gasphasenabscheidung mit magnetischen Materialien gefüllte Kohlenstoff-Nanoröhren mindestens in die Strukturierungen abgeschieden werden, danach mittels eines gerichteten Ätzverfahrens unter einem Winkel von > 0 ° bis < 90 ° das auf und/oder über der Oberfläche des Substrates vorhandene Material abgetragen wird.

## Beschreibung

Die Erfindung bezieht sich auf die Gebiete der Magnetwerkstoffe und der Nanotechnik und betrifft ein Verfahren zur Herstellung von nanostrukturierten magnetischen Funktionselementen, die beispielsweise zur Datenspeicherung oder als Komponente in Sensoren oder Aktoren angewandt werden können.

Eine magnetische Funktionalisierung findet in Industrie und Wissenschaft ein außerordentlich großes Interesse. Insbesondere im sub-µm- und nm-Bereich erschließen sich eine Reihe innovativer Anwendungen und Produkte. Eines der bekanntesten Beispiele sind Elemente zur Datenspeicherung. Darüber hinaus ist auch an schwingende Membranen, magnetische Nanosensoren und nur mittelbar magnetisch unterstützte Elemente, wie z.B. Feldemitter u.ä. zu denken. Ein Problem im nm-Bereich ist es hierbei, daß magnetische Materialien oxidationsempfindlich sind und deshalb dauerhaft und zuverlässig geschützt werden müssen.

Bekannt sind Verfahren (sogenannte Template-Verfahren) zur Einbettung von Kohlenstoff-Nanoröhren in eine Al₂O₃-Matrix durch naßchemisches Ätzen von Poren und anschließender Abscheidung der Nanoröhren ( T. Kyotani, et.al. Chem. Mater. 1996,8,2109-2113. und Jing Li et.al. Chem. Mater. 1998,10,1963 - 1967).
Ein Nachteil dieses Verfahrens ist es, dass die Anordnung geometrisch nicht vordefinierbar, sondern statistisch zufällig ist Bekannt sind auch Verfahren zur Herstellung von Eisen-, Kobalt- oder Nickelgefüllten Kohlenstoff-Nanoröhren durch chemische Gasphasenabscheidung (Chemical Vapor Deposition, CVD) oder CVD-ähnliche Methoden (US 2002055010; US 2002004136, WO 00176812A2).

Für eine magnetische Funktionalisierung ist es aber wichtig, das Schaltfeld gezielt einzustellen. Neben den reinen Elementen wie Fe, Co oder Ni ― deren Herstellung und Nutzung bereits bekannt ist - gilt das Interesse insbesondere den Legierungen dieser Elemente. Ein erstes Verfahren zur Herstellung NiFe gefüllter CNT's wurde bereits beschrieben (Grobert et.al. Chem. Commun. 2001; 471-472), wobei jedoch noch kein ferromagnetisches Verhalten nachgewiesen werden konnte und die gefüllten Nanoröhren nicht örtlich definiert auf Substraten und nicht ausgerichtet abgeschieden wurden. Noch günstigere Eigenschaften als NiFe, z.B. ein günstigeres Schaltverhalten, höhere Curie-Temperatur und eine hohe Sättigungsmagnetisierung zeigen FeCo-Legierungen. Zu deren Herstellung ist noch kein Verfahren bekannt.

Aufgabe der Erfindung ist es, ein Verfahren zur Herstellung von nanostrukturierten magnetischen Funktionselementen anzugeben, mit dessen Hilfe gefüllte Kohlenstoff-Nanoröhren mit ferromagnetischen Eigenschaften hergestellt werden können und die danach oder noch während des Herstellungsprozesses als magnetisch und/oder elektrisch wirkende Funktionselemente realisiert werden.

Die Aufgabe wird durch die in den Ansprüchen angegebene Erfindung gelöst. Weiterbildungen sind Gegenstand der Unteransprüche.
Bei dem erfindungsgemäßen Verfahren zur Herstellung von strukturierten magnetischen Funktionselementen werden in oder auf ein Substrat Strukturierungen entsprechend der gewünschten Funktion der Elemente realisiert. Dann werden mindestens diese Strukturierungen teilweise mit einer katalytisch wirkenden Metallschicht gefüllt und/oder beschichtet. Anschließend werden mittels der chemischen Gasphasenabscheidung (katalytische Pyrolyse von Kohlenwasserstoffen) mit magnetischen Materialien gefüllte Kohlenstoff-Nanoröhren mindestens in den Strukturierungen abgeschieden und danach mittels eines gerichteten Ätzverfahrens unter einem Winkel von >0° bis <90° mindestens das auf und/oder über der Oberfläche des Substrates vorhandene Material abgetragen.

Vorteilhafterweise wird die Strukturierung der Substrate mittels Lithographie und Ätzverfahren, oder durch chemische, physikalische oder biologische Selbstorganisationsprozesse oder Kombinationen dieser Verfahren und Prozesse realisiert , wobei die Abmessungen der Strukturierungen im µm- und/oder im nm-Bereich realisiert werden, wobei einzelne aufgebrachte Schichten oder Schichtsysteme eine zusätzliche magnetische Funktion ausüben können.

Ebenfalls vorteilhafterweise werden die Strukturierungen in würfelartiger, quaderartiger, zylindrischer, pyramidaler oder anderer dreidimensionaler regelmäßiger Form realisiert.

Ein weiterer Vorteil der Erfindung besteht darin, dass mit einer amorphen Kohlenstoffschicht versehenen Substrate strukturiert werden, wobei die Strukturierungen mittels elektroneninduzierter Oxidation eingebracht werden.

Von Vorteil ist es auch, wenn als Substratmaterialien Silicium, Siliciumoxid, Galliumarsenid oder mit Isolationsschichten und/oder Bufferlayern und/oder Funktionsschichten oder Funktionsschichtsystemen versehene nichtmagnetische Metallsubstrate eingesetzt werden.

Es ist auch von Vorteil, wenn katalytisch wirkende Metalle wie Fe, Co, Ni, Pt oder deren Legierungen auf die Substrate, vorzugsweise über physikalische Beschichtungsverfahren, aufgebracht werden.

Im Zusammenhang mit der Erfindung ist es ebenfalls von Vorteil, wenn das CVD-Verfahren unter Anwendung eines Zwei-Zonenofens durchgeführt wird, wobei in der ersten Niedertemperaturbereichszone die Sublimation der eingesetzten metallbeinhaltenden Verbindung realisiert wird und in der Hochtemperaturbereichszone die thermische Zersetzung der sublimierten Verbindung durchgeführt und damit die eigentliche Beschichtung realisiert wird.
Dabei werden vorteilhafterweise die Temperaturbereiche räumlich getrennt realisiert.

Bei der Verwendung von mehreren Precursoren mit sich deutlich unterscheidenden Sublimationstemperaturen kann es auch vorteilhaft sein, die Temperatur zur Zersetzung der einzelnen Ausgangsstoffe getrennt zu steuern und so von einem Zwei-Zonenofen auf einen Mehr-Zonenofen überzugehen. Die Zusammensetzung der einzelnen ferromagnetischen Komponenten in den Kohlenstoff-Nanoröhren kann dann in einfacher Weise auch durch die Temperatur zur Zersetzung der Einzelkomponenten gesteuert werden.

Es ist auch von Vorteil, wenn bei den CVD-Verfahren neben den metallbeinhaltenden Verbindungen Kohlenwasserstoffe (gesättigte und ungesättigte) eingesetzt werden. Damit kann beispielsweise das Verhältnis von Metall zu Kohlenstoff in der Gasphase und/oder in den Kohlenstoff-Nanoröhren beeinflusst werden.

Ebenfalls vorteilhaft ist es, wenn die Zusammensetzung der ferromagnetischen Mehrkomponentenfüllungen durch die Variation der Temperatur bei der Zersetzung der Ausgangsstoffe bestimmt wird.

Vorteilhaft ist es auch, wenn als Transportgas im CVD-Verfahren Ar, H₂, N₂ oder Gemische dieser Gase eingesetzt werden.

Als Ausgangsstoffe werden vorteilhafterweise Carbonyle oder metallorganische Verbindungen der magnetischen Metalle Fe, Co und Ni einzeln oder in Mischung eingesetzt. Des Weiteren können Pt-Verbindungen, die thermisch leicht zersetzbar sind, zur Anwendung kommen (vorwiegend metallorganische Verbindungen).

Das CVD-Verfahren besitzt den Vorteil, dass das Verhältnis der magnetischen Materialien in den Kohlenstoff-Nanoröhren der Funktionselementen direkt bestimmt wird durch das Mischungsverhältnis der Ausgangsverbindungen.

Es ist weiterhin ein Vorteil des erfindungsgemäßen Verfahrens, wenn das gerichtete Ätzen mit lonen mittels IBE (lon Beam Etching), RIBE (Reaktive lon Beam Etching) oder CAIBE (Chemical Assisted lon Beam Etching) durchgeführt wird.

Vorteilhafterweise wird das gerichtete Ätzen insbesondere zur partiellen Entfernung der Kohlenstoff-Nanoröhren unter einem Winkel von 2 bis 45 ° zur Oberfläche des Substrates durchgeführt und noch vorteilhafterweise unter einem Winkel von 5 bis 15°.

Weiterhin ist es vorteilhaft, wenn das Substrat während des Ätzens um die Ebenennormale rotiert oder bei dem die Richtung des Ätzens um die Ebenennormale rotiert.

Ebenfalls vorteilhaft ist es, wenn das gerichtete Ätzen an der Substratoberfläche aus einer oder mehreren Richtungen unter dem gleichen oder verschiedenen Ätzwinkeln durchgeführt wird.

Ein weiterer Vorteil der erfindungsgemäßen Lösung besteht darin, dass das gerichtete Ätzen zur Realisierung von regelmäßigen und/oder periodischen Anordnungen der schichtmaterialfreien oder beschichteten Oberflächenbereiche auf dem Substrat eingesetzt wird.

Vorteilhaft ist es auch, wenn die Wände der Vertiefungen in der Oberfläche des Substrates senkrecht zur Oberflächenebene ausgeführt werden.

Von Vorteil ist es ebenfalls, wenn die gefüllten Kohlenstoff-Nanoröhren zum Teil auch aus den Vertiefungen durch gerichtetes Ätzen entfernt werden, wobei insbesondere das Füllungsmaterial derart abgetragen wird, dass die Füllung in den Vertiefungen eine Neigung zur Längsachse der Nanoröhren aufweist, wodurch - insbesondere bei kurzen Röhren - eine uniaxiale Aniostropie eingestellt wird.

Weiterhin vorteilhaft ist es, wenn nach dem Auftragen von mehreren Schichten auf die Oberfläche des Substrates in den für die Abtragung vorgesehenen Bereichen nur eine oder einzelne Schichten abgetragen werden.

Ein weiterer Vorteil der Erfindung ist es, wenn nach dem Ätzen auf die Oberfläche des ganz oder teilweise beschichteten/gefüllten Substrates eine Passivierungs- oder Schutzschicht aufgebracht wird, wobei beispielsweise Si₃N₄-, SiO₂-; Al₂O₃- oder amorphe Kohlenstoffschichten oder Kombinationen aus den Einzelschichten aufgebracht werden.

Ebenfalls von Vorteil ist bei dem erfindungsgemäßen Verfahren, dass eine weitere strukturierte oder unstrukturierte magnetische Funktionsschicht aufgebracht werden kann, oder unterhalb der zu strukturierenden Schicht eine durchgehende oder strukturierte magnetische oder nichtmagnetische Funktionsschicht aufgebracht wird.

Eine weiter vorteilhafte Variante der Erfindung besteht darin, dass die hergestellten ferromagnetisch gefüllte Kohlenstoffnanoröhren in einem weiteren Verfahrensschritt zu einem Verbundwerkstoff verarbeitet werden.

Bei dem erfindungsgemäßen Verfahren werden auf strukturierte Substrate dünne, für das Nanoröhrenwachstum katalytisch wirkende Metallschichten, vorzugsweise über physikalische Beschichtungsverfahren, aufgebracht. Es ist ausreichend, wenn die Schichtdicke dieser Metallschichten ca. 2-5 nm beträgt. Vorteilhaft ist es, wenn diese Schichten durch bekannte Methoden der Dünnschichttechnik in geometrisch erwünschter Weise vorstrukturiert sind. Alternativ hierzu ist auch die Erzeugung katalytischer Dotmasken durch chemische, physikalische oder biologische Selbstorganisationsprozesse, oder aus Kombinationen daraus möglich.

Zur Reduzierung einer Oberflächendiffusion kann es vorteilhaft sein, die Strukturübertragung der katalytisch wirkenden Metallschicht durch eine sogenannte "lift-off"-Strukturierung vorzunehmen und vor der Abscheidung die Substratoberfläche partiell teilweise abzuätzen (Lochätzung).

Es ist vorteilhaft, die Sublimation der metallbeinhaltenden Ausgangsverbindungen im Temperaturbereich von 100°C bis 175°C durchzuführen. Das eigentliche Wachstum der metallgefüllten Kohlenstoff-Nanoröhren erfolgt vorteilhaft in einem Temperaturbereich von 850°C bis 1050°C. Hierfür werden die sublimierten Metallocene (Fe, Co, Ni), Carbonyle dieser Metalle oder metallorganische Verbindungen einzeln oder als Gemisch über ein metallbeschichtetes Substrat (vorzugsweise Fe) transportiert. Dem Gas kann wahlweise ein Kohlenwasserstoff zugegeben werden. Der Ort des Nanoröhren-Wachstums wird durch den Ort der katalytischen Metallpartikel auf dem vorbeschichteten Substrat bestimmt. Die Länge der gefüllten Röhren wird durch die Zeitdauer des CVD-Prozesses, der Sublimationstemperatur und damit der Konzentration der Precursoren, der Reaktionstemperatur sowie den Strömungsverhältnissen im Reaktor bestimmt. Während der Reaktion können komplett und/oder partiell gefüllte Röhren dargestellt werden.

Das Verhältnis zwischen Magnetwerkstoffen in der Legierung kann durch Variation der Precursorenkonzentration, der Sublimationstemperatur und der Temperatur in der Reaktionszone bestimmt werden.

Überraschenderweise wurde gefunden, dass für das Wachstum kurzer Röhren das katalytisch wirkenden Metall als Quelle für ein Legierungsbestandteil insbesondere Eisen genutzt werden kann.

Die auf die erfindungsgemäße Weise hergestellten Funktionselemente werden beispielsweise als Datenspeicherelemente genutzt.
Dazu werden beispielsweise in eine amorphe Kohlenstoffschicht, die auf einem Siliciumsubstrat aufgebracht worden ist, zylindrische Löcher in regelmäßiger Anordnung und gleicher Größe eingebracht. Die Anordnung der Löcher wird durch die gewünschte Art und Weise der Datenspeicherung und der Anwendung des gesamten Funktionselementes bestimmt.
In die zylindrischen Löcher wird beispielsweise eine katalytisch wirkende Fe-Schicht eingebracht, die möglichst nur den Boden der Löcher bedeckt. Anschließend wird das Substrat in den hinteren Teil eines CVD-Reaktors eingebracht. Im vorderen Teil des Reaktors wird dann eine Mischung aus Ferrocenen und Cobaltocenen bei Temperaturen von 100 °C bis 175 °C sublimiert und gemeinsam mit dem strömenden Gas/Gasgemisch in die heiße Zone des Reaktorraumes transportiert. Dort erfolgt dann die Abscheidung der Legierung auf dem Substrat. Die Abscheidung erfolgt auch innerhalb der Löcher, die sich damit mit dem Legierungsmaterial füllen und zum Teil auch über die Substratoberfläche hinauswachsen können, ebenso wie die Kohlenstoffhülle. Danach werden die Beschichtungsmaterialien und die überstehenden Teile der gefüllten Nanoröhren durch das gerichtete Ätzverfahren von der Substratoberfläche abgetragen. Die Entfernung der über die Substratoberfläche hinausgehenden Anteile der gefüllten Kohlenstoff-Nanoröhren ist selbstverständlich nur dann notwendig, wenn der überstehende Anteil die Funktion des Bauelementes nachteilig beeinflusst. Anschließend kann je nach Anwendungsfall eine Schutzschicht auf die gesamte oder auf Teilen der Substratoberfläche aufgebracht werden.

Im Gerätebau besteht auch ein Problem darin, sehr kleine Flüssigkeitsmengen sehr genau dosieren zu können. Besondere Probleme treten dann auf, wenn es sich hierbei um aggressive Flüssigkeiten, z.B. konzentrierte Säuren ggf. auch bei höheren Temperaturen handelt. Die unter Nutzung des erfindungsgemäßen Verfahrens hergestellten ferromagnetisch gefüllten Kohlenstoff-Nanoröhren könnten aufgrund ihres hervorragenden Oxidationsschutzes eine wesentliche Komponente zur Lösung der Probleme in diesen Aktoren/Sensoren erfüllen. Gegenüber konventionellen Dünnschichtlösungen unter Nutzung strukturierter und mit Schutzschichten abgedeckter Elemente besteht unter Anderem der Vorteil der Nanoröhren darin, dass sie praktisch "pin-hole"-frei sind und deshalb allen chemischen Stoffen über sehr lange Zeit widerstehen können, gegen die Kohlenstoff inert ist. So können unter Nutzung der Mikromechanik (A. Heuberger (Hrsg.), Mikromechanik, Springer-Verlag;1989 und 1991) Zahnräder oder Pumpenschaufelräder hergestellt werden und mit dem erfindungsgemäßen Verfahren im Silizium ferromagnetisch gefüllte Kohlenstoff-Nanoröhren implementiert werden. Aufgrund des angestrebten Oxidationsschutzes wird hier auf eine Kürzung des Materials verzichtet und durch Steuerung der Wachstumsbedingungen erreicht, dass die gefüllten Nanoröhren nicht über die Materialoberfläche hinausragen. Durch Realisierung eines GMR- oder TMR-Sensors (GMR = Giant Magneto-Resistance; TMR = Tunneling Magneto-Resistance) im umgebenden Substratmaterial kann die Umdrehungszahl der Schaufelräder oder die Stellung der Zahnräder (Winkel) sehr genau bestimmt werden.

Im Weiteren wird die Erfindung an einem Ausführungsbeispiel näher erläutert.

### Beispiel 1

Als Substrat dient ein thermisch oxidierter Siliziumwafer mit einer Oxidschichtdicke von 1 µm. Auf diesem Wafer wird durch spincoating eine 1µm dicke Fotolackschicht, (ARP 671.04 Fa. Allresist, Straußberg) aufgebracht und anschließend einer Wärmebehandlung von 95°C für 1 min auf einer Heizplatte unterzogen. Im folgenden Prozeßschritt wird durch Elektronenstrahllithographie ein regelmäßiges Dotmuster realisiert. Die Einzelstrukturen weisen die Größe von 50nm x 50nm bei einem Abstand von 100nm auf. Nach der Belichtung und der erforderlichen Resistentwicklung werden die Substrate in Reinstwasser gespült und getrocknet. Im Folgeschritt werden die nicht mit Fotolack abgedeckten SiO₂-Anteile teilweise entfernt (Lochätzung). Hierfür wird ein reaktiver Ionenätzprozeß mit CF₄ als Ätzgas bei
P_{HF}=300W; P_{CF4}= 10⁻²mbar für t=5min durchgeführt. Die unter diesen Bedingungen abgeätzte SiO₂-Schichtdicke beträgt ca. 500nm.

Im nächsten Schritt wird durch Magnetronsputtern eine ca. 5nm dicke Eisenschicht abgeschieden und der Wafer anschließend in Aceton (15 Minuten) behandelt. Hierbei erfolgt ein Ablösen des Fotolackes und damit ein Abheben der auf dem Fotolack abgeschiedenen Schichtanteile. Die katalytisch wirkenden Fe-Anteile befinden sich nunmehr nur in den tiefergeätzten SiO₂-Bereichen.

Vor Beginn der eigentlichen Abscheidung ist es vorteilhaft eine Reinigung des vorstrukturierten Wafers in einem Wasserstoffplasma durchzuführen.
Der vorstrukturierte Wafer wird nun in die Reaktionszone eines CVD-Reaktors und auf 1000 °C aufgewärmt. Der verwendete CVD-Reaktor gestattet es, die Temperatur in mehreren Zonen unabhängig voneinander definiert einzustellen. Für die Herstellung der ferromagnetisch gefüllten Kohlenstoff-Nanoröhren wird als Ausgangsstoff eine Mischung von je 0,25 g Ferrocene und Cobaltocene eingesetzt. Diese Precursoren werden bei einer Temperatur von 120°C außerhalb der eigentlichen Reaktionszone sublimiert. Als Trägergas wird Argon eingesetzt. Die hier eingesetzten Metallocene sind sowohl Quelle des ferromagnetischen Materials als auch des Kohlenstoffes für die Hülle. Unter den realisierten Bedingungen werden innerhalb von 10 min ca. 700 nm lange gefüllte Kohlenstoffröhren abgeschieden. Infolge geringer Temperaturschwankungen, unterschiedlicher Strömungsverhältnisse und/oder Schwankungen der Precursorenkonzentration können die hergestellten Kohlenstoff-Nanoröhren eine Variation in der Länge aufweisen. Zur Herstellung gleichlanger gefüllter Kohlenstoff-Nanoröhren werden diese im nachfolgenden Technologieschritt einem gerichteten Ätzprozess unterworfen. Durch einen Argonlonenstrahlätzen unter einem Winkel von 8 ° relativ zur Probenoberfläche werden die oberhalb der ungeätzten SiO₂-Oberfläche liegenden Anteile entfernt.

Dieser Ätzvorgang wird bei folgenden Bedingungen durchgeführt:
Ätzgas: Argon
Druck: 6 x 10⁻⁴ mbar
Beschleunigungsspannung: 400V
Mikrowellenleistung: 170 W

Ein weiterer Vorteil dieses Ätzverfahrens besteht darin, dass durch die sich infolge des flachen Winkels einstellende Geometrie des Kernes eine Formanisotropie der Nanostruktur realisiert werden kann. Diese Formanisotropie beeinflusst das spätere Schaltverhalten günstig. Nach Entfernung der überstehenden Anteile der legierungsgefüllten Nanoröhren wird anschließend eine Schicht aus amorphem Kohlenstoff in einer Schichtdicke von 30 nm als Schutzschicht abgeschieden.
Das so hergestellte Funktionselement wird als Speichermaterial eingesetzt.

## Patentansprüche

1. Verfahren zur Herstellung von strukturierten magnetischen Funktionselementen bei dem in oder auf ein Substrat Strukturierungen entsprechend der gewünschten Funktion der Elemente realisiert werden, mindestens diese Strukturierungen teilweise mit einer katalytisch wirkenden Metallschicht gefüllt und/oder beschichtet werden, anschließend mittels der chemischen Gasphasenabscheidung (katalytische Pyrolyse von Kohlenwasserstoffen) mit magnetischen Materialien gefüllte Kohlenstoff-Nanoröhren mindestens in die Strukturierungen abgeschieden werden, danach mittels eines gerichteten Ätzverfahrens unter einem Winkel von > 0 ° bis < 90 ° mindestens das auf und/oder über der Oberfläche des Substrates vorhandene Material abgetragen wird.

2. Verfahren nach Anspruch 1, bei dem die Strukturierung der Substrate mittels Lithographie und Ätzverfahren, oder durch chemische, physikalische oder biologische Selbstorganisationsprozesse oder Kombinationen dieser Verfahren und Prozesse realisiert wird.

3. Verfahren nach Anspruch 1, bei dem die Abmessungen der Strukturierungen im µm- und/oder im nm-Bereich realisiert werden.

4. Verfahren nach Anspruch 1, bei dem die Strukturierungen in würfelartiger, quaderartiger, zylindrischer, pyramidaler oder anderer dreidimensionaler regelmäßiger Form realisiert werden.

5. Verfahren nach Anspruch 1, bei dem mit einer amorphen Kohlenstoffschicht versehenen Substrate strukturiert werden.

6. Verfahren nach Anspruch 5, bei dem Strukturierungen in der amorphen Kohlenstoffschicht mittels elektroneninduzierter Oxidation eingebracht werden.

7. Verfahren nach Anspruch 1, bei dem als Substratmaterialien Silicium, Siliciumoxid, Metallkeramiken, Galliumarsenid oder mit Isolationsschichten und/oder Bufferlayern und/oder Funktionsschichten oder Funktionsschichtsystemen versehene nichtmagnetische Metallsubstrate eingesetzt werden.

8. Verfahren nach Anspruch 1, bei dem als katalytisch wirkende Metalle Fe, Co, Ni, Pt oder deren Legierungen auf die Substrate aufgebracht werden.

9. Verfahren nach Anspruch 1, bei dem das CVD-Verfahren unter Anwendung eines Zwei-Zonenofens durchgeführt wird, wobei in der ersten Niedrigtemperaturbereichszone die Sublimation der eingesetzten metallbeinhaltenden Verbindungen realisiert wird und in der Hochtemperaturbereichszone die thermische Zersetzung der sublimierten Verbindungen realisiert wird.

10. Verfahren nach Anspruch 9, bei dem die Temperaturbereiche räumlich getrennt realisiert werden.

11. Verfahren nach Anspruch 1, bei dem das CVD-Verfahren unter Anwendung eines Mehr-Zonenofens durchgeführt wird, wobei in mehreren Niedrigtemperaturbereichszonen die Sublimation jede der eingesetzten metallbeinhaltenden Verbindungen bei ihrer Sublimationstemperatur realisiert und in der Hochtemperaturbereichszone die thermische Zersetzung der sublimierten Verbindungen realisiert wird.

12. Verfahren nach Anspruch 1, bei dem die Zusammensetzung der ferromagnetischen Mehrkomponentenfüllungen durch die Variation der Temperatur bei der Zersetzung der Ausgangsstoffe bestimmt wird.

13. Verfahren nach Anspruch 1, bei dem als Gas im CVD-Verfahren Ar, H₂, N₂ oder Gemische dieser Gase eingesetzt werden.

14. Verfahren nach Anspruch 1, bei dem als Ausgangsstoffe Carbonyle oder metallorganische Verbindungen der magnetischen Metalle Fe, Co, Ni oder thermisch leicht zersetzbare Pt-Verbindungen einzeln oder in Mischung eingesetzt werden.

15. Verfahren nach Anspruch 1, bei dem das Verhältnis der magnetischen Materialien in den Kohlenstoff-Nanoröhren der Funktionselemente direkt durch das Mischungsverhältnis der Ausgangsverbindungen bestimmt wird.

16. Verfahren nach Anspruch 1, bei dem das gerichtete Ätzen mit lonen mittels IBE (lon Beam Etching), RIBE (Reaktive lon Beam Etching) oder CAIBE (Chemical Assisted lon Beam Etching) durchgeführt wird.

17. Verfahren nach Anspruch 1, bei dem das gerichtete Ätzen unter einem Winkel von 2 bis 45 ° zur Oberfläche des Substrates durchgeführt wird.

18. Verfahren nach Anspruch 1, bei dem das gerichtete Ätzen unter einem Winkel von 5 bis 15 ° zur Oberfläche des Substrates durchgeführt wird.

19. Verfahren nach Anspruch 1, bei dem das Substrat während des Ätzens um die Ebenennormale rotiert oder bei dem die Richtung des Ätzens um die Ebenennormale rotiert.

20. Verfahren nach Anspruch 1, bei dem das gerichtete Ätzen an der Substratoberfläche aus einer oder mehreren Richtungen unter dem gleichen oder verschiedenen Ätzwinkeln durchgeführt wird.

21. Verfahren nach Anspruch 1, bei dem das gerichtete Ätzen zur Realisierung von regelmäßigen und/oder periodischen Anordnungen der schichtmaterialfreien oder beschichteten Oberflächenbereiche auf dem Substrat eingesetzt wird.

22. Verfahren nach Anspruch 1, bei dem die Wände der Vertiefungen in der Oberfläche des Substrates senkrecht zur Oberflächenebene ausgeführt werden.

23. Verfahren nach Anspruch 1, bei dem die gefüllten Kohlenstoff-Nanoröhren zum Teil auch aus den Vertiefungen durch gerichtetes Ätzen entfernt werden.

24. Verfahren nach Anspruch 1, bei dem mindestens die Füllungen der Nanoröhren mit einer Neigung zur Längsachse der Nanoröhre abgetragen werden, wodurch eine uniaxiale Anisotropie eingestellt wird.

25. Verfahren nach Anspruch 1, bei dem nach dem Auftragen von mehreren Schichten auf die Oberfläche des Substrates in den für die Abtragung vorgesehenen Bereichen nur eine oder einzelne Schichten abgetragen werden.

26. Verfahren nach Anspruch 1, bei dem nach dem Ätzen auf die Oberfläche des ganz oder teilweise beschichteten/gefüllten Substrates eine Passivierungsoder Schutzschicht aufgebracht wird.

27. Verfahren nach Anspruch 26, bei dem Si₃N₄-, SiO₂-, Al₂O₃- oder amorphe Kohlenstoffschichten oder Kombinationen aus den Einzelschichten aufgebracht werden.

28. Verfahren nach Anspruch 1, bei dem eine weitere strukturierte oder unstrukturierte magnetische Funktionsschicht aufgebracht wird.

29. Verfahren nach Anspruch 1, bei dem unterhalb der zu strukturierenden Schicht eine durchgehende oder strukturierte magnetische oder nichtmagnetische Funktionsschicht aufgebracht wird.

30. Verfahren nach Anspruch 1 , bei dem ferromagnetisch gefüllte Kohlenstoffnanoröhren hergestellt werden, die anschließend in einem weiteren Verfahrensschritt zu einem Verbundwerkstoff verarbeitet werden.
